**Europäisches Patentamt**

**European Patent Office**

**Office européen des brevets**

(19)

(11) Veröffentlichungsnummer: **0 126 262**

**B1**

(12)

# EUROPÄISCHE PATENTSCHRIFT

(45) Veröffentlichungstag der Patentschrift:
02.09.87

(51) Int. Cl.⁴: **G 05 B 9/02,** G 01 F 15/00

(21) Anmeldenummer: **84103934.0**

(22) Anmeldetag: **09.04.84**

(54) Einrichtung zum Betreiben und Überwachen einer Dosiervorrichtung.

(30) Priorität: **18.04.83 DE 3313993**

(43) Veröffentlichungstag der Anmeldung:
**28.11.84 Patentblatt 84/48**

(45) Bekanntmachung des Hinweises auf die Patenterteilung:
**02.09.87 Patentblatt 87/36**

(84) Benannte Vertragsstaaten:
**AT BE DE FR IT NL**

(56) Entgegenhaltungen:
**EP-A-0 057 938**
**DE-A-2 704 387**
**DE-A-2 805 876**
**DE-B-2 743 606**
**US-A-4 120 032**

(73) Patentinhaber: **LANG APPARATEBAU GMBH,
Raiffeisenstrasse 7, D-8221 Siegsdorf Obb. (DE)**

(72) Erfinder: **Helminger, Karl, Hüttenweg 14, D-8229
Ainring- Hammerau (DE)**
Erfinder: **Bödecker, Kay, Lindenstrasse 20, D-8224
Chieming (DE)**
Erfinder: **Helminger, Alois, Hochkreuzstrasse 17,
D-8221 Hufschlag (DE)**

(74) Vertreter: **Bornemann, Dieter, Dipl.- Ing., c/o
Henkel Kommanditgesellschaft auf Aktien -
Patentabteilung - Postfach 1100 Henkelstrasse
67, D-4000 Düsseldorf (DE)**

**Beschreibung**

Die Erfindung betrifft eine Einrichtung zum Betreiben und Übrwachen einer Dosiervorrichtungin der Wasseraufbereitung mit elektronischer Ansteuerung und Kontrolle der Funktionen.

Im Gebrauch befindliche Einrichtungen dieser Art werden beispielsweise auch in der Wasseraufbereitung eingesetzt. Die steuer- bzw. Regelkreise der Einrichtungen enthalten elektronische, elektromechanische und mechanische Elemente. Diese Einrichtungen sind voluminös, aufwendig in der Herstellung und in den Funktionen nicht zuverlässig. So kann es beispielsweise zum Durchlegieren eines Halbleiterelements kommen mit der Folge eines Dauerbetriebs bzw. -ausfalls der Dosiervorrichtung und damit unerwünschten und/oder gesundheitsschädlichen Überdosierungen bzw. Unterdosierungen

Aus DE-A-28 05 876 ist eine elektrische Überwachungseinrichtung für scheinwiderstandsbehaftete Sensoren und Verbraucher sowie deren Ansteuersignale im Bereich der Kraftstoffzumessung bei Brennkraftmaschinen bekannt. Diese bekannte Einrichtung funktioniert in der Weise, daß lediglich elektrische Signalwerte der Sensoren und Verbraucher einer Schwellwertstufe zugeführt werden, mit deren Ausgangssignal eine Fehlerreaktionsschaltungsanordnung schaltbar ist.

Weiterhin ist aus DE-A-27 43 606 auch schon bekannt, für die Steuerung von Dosiervorrichtungen CMOS-Schaltkreise sowie die "Not-Aus-Funktion" zu verwenden.

Der Erfindung liegt demgegenüber die Aufgabe zugrunde, eine elektronische Überwachungseinrichtung für eine Dosiervorrichtung zu schaffen, die gegenüber bisherigen Einrichtungen dieser Art ein wesentlich kleineres Volumen hat sowie mit erheblich geringerem Aufwand herzustellen ist und die vor allem absolut einwandfreie Funktionen gewährleistet, so daß Fehldosierungen nicht auftreten können. Die erfindungsgemäße Lösung ist für die eingangs genannte Einrichtung gekennzeichnet durch die Kombination der Merkmale des Hauptanspruches. Eine zweckmäßige Weiterbildung ist Gegenstand des Unteranspruches.

Durch die Zusammenfassung des elektronischen Aufbaus in einem einzigen, vorzugsweise nach der CMOS-Technik hergestellten, Elektronikbaustein werden Volumen und Herstellungskosten gegenüber herkömmlichen Steuerungen dieser Art wesentlich reduziert. Trotzdem können für jede Funktion eine Melde- und/oder eine Rückmeldeleitung sowie eine solche integrierte Schaltung vorgesehen werden, dan jedem Fehler an irgendeiner Stelle der Dosiervorrichtung oder deren zugehöriger Beschaltung und Apparatut die Not-Aus-Funktion zugeordnet werden kann, so daß die Dosiervorrichtung und der Fluß des Dosierchemikals gesperrt werden. Verbesserungen und weitere Ausgestaltungen der Erfindung werden in den Unteransprüchen angegeben.

Anhand der schematischen Zeichnung eines Prinzipschaltbildes werden Einzelheiten der Erfindung erläutert.

Das Herz der erfindungsgemäßen Überwachungseinrichtung bildet ein, insbesondere nach der CMOS-Technik hergestellter, Elektronikbaustein 1. Dieser ist in getakteter Logik ausgeführt. Sicherheitskritische Bereiche der Logik sind redundant aufgebaut. Bei Ausfall des Taktes ist dann gewährleistet, dan trotzdem die erforderliche Not-Aus-Funktion oder dergleichen erhalten bleibt. Bei der Differenzdruck-Überwachung wird der Druck vorzugsweise über Piezo-Druckaufnehmer gemessen und in einer elektrischen Vergleichsschaltung in ein Logiksignal umgewandelt.

Der Elektronikbaustein 1 besitzt Melde- und/oder Rückmeldeleitungen zu jeder Meß-, Steuer- oder Regelstelle der Überwachungseinrichtung. Eine erste Melde- und Rückmeldeleitungsgruppe 2 führt zu einer elektronischen Teilerschaltung im Baustein 1 mit zugeordnetem Kodierschalter 3. Bine zweite Leitungsgruppe 4 führt zu einem den Dosiermittelstand 5 in einem Dosiermittelbehälter 6 erfassenden Aufnehmer 7. Eine dritte Melde- und Rückmeldeleitungsgruppe 8 führt zu einem Differenzdruck-Überwachungsgerät 9, dem zwei Fühler 10 und 11 vor und nach einem Dosier- bzw. Impfventil 12 zugeordnet sind. Eine vierte Leitung 13 des Elektronikbausteins 1 ist die Masseleitung. Eine fünfte Leitungsgruppe 14 führt zu einem Relais 15 bzw. einem Relaiskontakt 16. Eine sechste Leitung 17 führt von dem Relaiskontakt 16 zu dem zu steuernden Dosierantriebsmotor 18. Eine siebente Leitung 19 führt zur Endstufe 20. Eine achte Leitung 21 führt von der Endstufe 20 zum Dosierantriebsmotor 18 sowie zum Elektronikbaustein 1. Eine neunte Leitungsgruppe 22 führt zu einem einem Dosierpumpenantrieb 23 zugeordneten Aufnehmer 24. Schließlich führt eine zehnte Leitungsgruppe 25 zu einem einem in eine Wasserleitung 26 gesetzten Wasserzähler 27 zugeordneten Aufnehmer 28. Im Grundsatz kann die Leitung 26 jede andere Flüssigkeit führen.

Das Dosieren erfolgt dadurch, dan mittels des durch den Pumpenantrieb 23 betätigten Dosierkolbens 29 über die Leitung 30 und das Saugventil 31 Dosierflüssigkeit 32 aus dem Dosiermittelbehälter 6 in den Dosierzylinder 33 gesaugt und über die Druckleitung 34 und das Impfventil 12 an der Dosierstelle bzw. Impfstelle 35 in die Wasserleitung 26 eindosiert wird.

Der Elektronikbaustein 1 sorgt erfindungsgemäß durch Selbstüberwachung für eine absolut einwandfreie Funktion der Überwachungseinrichtung und garantiert bei jeder Störung eine Not-Aus-Funktion durch Abfallen des Relais 15. Alle Störungen oder Schäden können einzeln angezeigt werden. Im Ausführungsbeispiel werden eine optische Anzeige 36 für Störungen allgemeiner Art und eine optische Anzeige 37 für Chemikalienmangel sowie eine zusätzliche akustische Anzeige 38 vorgesehen.

Zum automatischen Ausführen der Not-Aus-Schaltung dient ein Relais 15, welches beim Einschaltvorgang eine Ruhelagenkontrolle (Abfrage: Kontrolle Relais abgefallen) durchläuft und erst nach Überprüfung dieser Funktion anzieht, jedoch bei Störung jedes nächsten Prüfvorgangs wieder abfällt.

Die vom Wasserzähler 27 über den Aufnehmer 28 und die Leitung 25 beim Elektronikbaustein 1 ankommenden Impulse werden im Elektronikbaustein 1 entsprechend durch den mit dem Kodierschalter 3 gewählten Wert geteilt. Bei Koinzidenz dieset Impulse mit dem jeweils voreingestellten Wert Kodierschalters 3 wird die Dosiereinrichtung mit Antriebsmotor 19, Pumpeantrieb 23, Kolben 29 und Zylinder 33 aktiviert. Die Aktivierung erfolgt dabei über einen Zeitraum, der den Ablauf eines Dosierhubs des Kolbens 29 auch unter ungünstigsten Bedingungen, z. B. bei geringer Versorgungsspannung, mechanischer Schwergängigkeit und dergleichen, sicherstellt bzw. aufrechterhält. Erfolgt beispielsweise innerhalb dieses vorgegebenen Dosierzeitraums keine Rückmeldung über die mit dem Aufnehmer 24 zu erfassende Endlagenkontrolle des Pumpenantriebs 23, so stellt der Elektronikbaustein 1 eine Störung fest und deaktiviert das Realais 15, so daß dieses abfällt und der Relaiskontakt 16 die Not-Aus-Stellung einnimmt.

Auch nach Beendigung eines Dosiervorgangs erfaßt der Elektronikbaustein 1 den Schaltzustand der Motorendstufe 20 über die Rückmeldeleitung 21. Sollte die Stufe hierbei eine Spannung, die größer oder gleich der minimalen Motorspannung ist, führen, stellt der Elektronikbaustein 1 ebenfalls eine Störung fest und veranlaßt die Not-Aus-Schaltung über das Relais 15.

Zum Erfassen des Chemikalienfüllstands bzw. Dosiermittelstands 5 im Dosiermittelbehälter 6 wird vorzugsweise ein mit einem Kontaktfluß messenden Hallelement ausgestatteter Aufnehmer 7 eingesetzt. Die Schaltung wird hierbei zweckmäßig so programmiert, daß bei Unterschreiten eines vorgegebenen Mindestpegels eine Abschaltung der Dosierpumpe 23 und det zugehörigen Elemente veranlaßt wird, sowie eine Aktivierung der optischen Anzeige 37 erfolgt.

Schließlich ist es wichtig zu wissen, ob bei voll in Betrieb befindlicher Dosierpumpe 23 auch wirklich Dosiermittel an der Dosierstelle 35 in die Wasserleitung 26 eindosiert wird. Hierzu dient das Differenzdruck-Überwachungsgerät 9 mit Fühlern 10 und 11 beiderseits des Druck- bzw. Impfventils 12. Wenn beispielsweise der Druck am Fühler 10 auf der Pumpenseite niedriger ist als am Fühler 11 auf der Leitungsseite, kann - selbst bei laufender Pumpe - nicht dosiert werden. Stellt also das Differenzdruck-Überwachungsgerät 9 am leitungsseitigen Fühler 11 einen höheren Druck als oder den gleichen Druck wie am pumpenseitigen Fühler 10 fest, so erkennt daraus der Elektronikbaustein 1 eine Störung und sorgt für eine Not-Aus-Schaltung über das Relais 15. Die Überwachung erfolgt derart, dan der Elektronikbaustein 1 nach Aktivieren des Pumpenantriebs 23 zu einer unbestimmten Zeit t ein Rückmeldesignal aus dem Differenzdruck-überwachungsgerät 9 erwartet. Trifft dieses nicht während des Zeitraums bis zum nächsten Pumpenhub ein, wird die obengenannte Störungsmeldung erzeugt.

## Bezugszeichenliste

1 = Elektronikbaustein
2 = erste Melde- und Rückleitungsgruppe
3 = Kodierschalter
4 = zweite Leitungsgruppe
5 = Dosiermittelstand
6 = Dosiermittelbehälter
7 = Aufnehmer (5)
8 = dritte Melde- und Rückmeldeleitungsgruppe
9 = Differenzdruck-Überwachungsgerät
10 = Fühler (vor l2)
11 = Fühler (nach 18)
12 = Impfventil
13 = vierte Leitung
14 = fünfte Leitungsgruppe
15 = Relais
16 = Relaiskontakt
17 = sechste Leitung
18 = Dosierantriebsmotor
19 = siebte Leitung
20 = Motorendstufe
21 = achte Leitung
22 = neunte Leitungsgruppe
23 = Dosierpumpenantrieb
24 = Aufnehmer (23)
25 = Zehnte Leitungsgruppe
26 = Wasserleitung
27 = Wasserzähler
28 = Aufnehmer (27)
29 = Dosierkolben
30 = Dosiermittelleitung
31 = Saugventil
32 = Dosierflüssigkeit
33 = Dosierzylinder
34 = Druckleilung
35 = Dosierstelle
36 = Störungsanzeige, optisch
37 = Chemikalienmangel-Anzeige, optisch
38 = akustische Anzeige

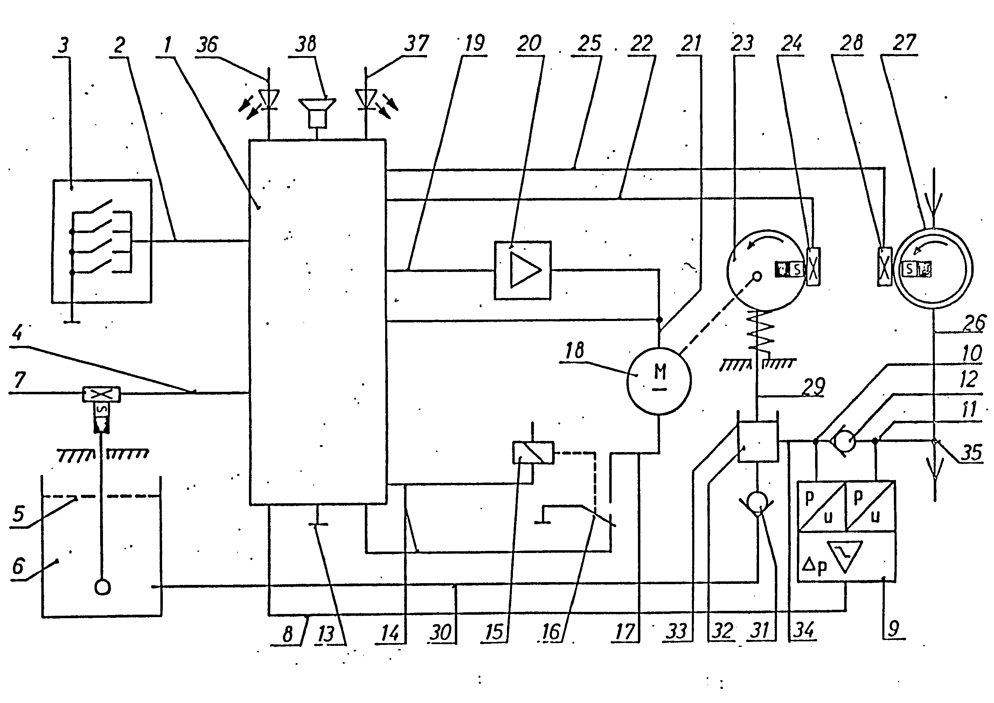

## Patentansprüche

Einrichtung zum Betreiben und zum Überwachen einer Dosiervorrichtung (29, 33) in der Wasseraufbereitung mit elektronischer Ansteuerung und Kontrolle der Funktionen, gekennzeichnet durch die Zusammenfassung des gesamten zum Betrieb erforderlichen elektronischen Schaltungsaufbaus in einem einzigen, nach der CMOS-Technik hergestellten Elektronikbaustein (1) mit Selbstüberwachung aller aufgelegten Funktionen und Not-Aus-Funktion bei jeder Störung, wobei der Not-Aus-Funktion ein beim Einschaltvorgang eine Null-Lagen-Kontrolle ausführendes nach Überprüfung dieser Funktion anziehendes, jedoch bei Störung eines Prüfvorgangs wieder abfallendes Relais (15) zugeordnet ist, und wobei den von einem das Volumen der mit dem Dosierchemikal zu beaufschlagenden Flüssigkeit messenden Flüssigkeitszähler (27) gelieferten Impulsen ein über einen Kodierschalter (3) im Hinblick auf Aktivierung der Dosiervorrichtung bei Koinzidenz dieser Impulse mit dem jeweils voreingestellten Wert des Kodierschalters (3) ansprechendes elektronisches Getriebe im Elektronikbaustein (1) zugeordnet ist, wobei der Elektronikbaustein (1) derart ausgelegt ist, daß die Aktivierung der Dosiervorrichtung auch über einen Zeitraum erfolgt, der den Ablauf des Dosierhubs auch unter ungünstigsten Bedingungen sicherstellt, wobei der Dosiervorrichtung, deren Antrieb (18, 23) eine auf den Elektronikbaustein (1) geschaltete Endlagenkontrolle des Pumpenantriebes (23) mit Aufnehmer (24) zugeordnet ist, sowie mit einer Dosierchemikalien-Füllstandsüberwachung mit einem auf den Elektronikbaustein (1) geschalteten, vorzugsweise einen kontaktlos messenden Hallschalter enthaltenden, aufnehmer (7) und mit einem Differenzdruck-Überwachungsgerät (9) mit Fühlern vor (10) und nach (11) einem zwischen Dosiervorrichtung (29, 33) und zu behandelnder Flüssigkeitsleitung (26) geschaltetes Impfventil (12) zur Kontrolle der Ist-Funktion des Dosierantriebs (18, 23).

2. Einrichtung nach Anspruch 1, gekennzeichnet durch eine optische und/oder akustische Anzeige (36, 37, 38) insbesondere mit Unterscheidung zwischen allgemeiner Störung und Chemikalienmangel.

## Claims

1. Equipment for the operating end monitoring of a metering device (29, 33) in the water preparation with electronic control and checking of the functions, characterised by the combination of the entire electronic switching system required for operation into a single electronic block (1), manufectured in accordance with CMOS technique, with self-monitoring of all imposed functions end emergency-off function on each disturbance, wherein the emergency-off function is associated with a relay (15), which carries out a zero-position check during the switching-on process, attracts after testing this function, however again releases on disturbance of a testing process, and wherein the pulses, which are delivered by a liquid counter (27) measuring the volume of the liquid to be charged with the metered chemical, are associated with an electronic gear which is in the electronic block (1) and responds by way of a coding switch (3) with a view to activation of the metering device on co-incidence of these pulses with the respectively preset value of the coding switch (3), wherein the electronic block (1) is designed in auch a manner that the activation of the metering device also takes place over a time span which ensures the run-down of the metering stroke even under most unfavourable conditions, wherein the drive (18, 23) of the metering device is associated with an end position check, connected to the electronic block (1), of the pump drive (23) with pick-up (24) as well as associated with a metered chemical filling state monitor with a pick-up (7), which is connected to the electronic block (1) and preferably contains a contactlessly measuring Hall switch, and associated with a pressure differance monitoring device (9) with sensors upstream (10) and downstream (11) of an injection valve (11), which is connected between metering device (29, 33) and liquid duct (26) to be treated, for the checking of the actual function of the metering drive (18, 23).

2. Equipment according to claim 1, characterised by an optical and/or acoustical indicator (36, 37, 38), in particular with distinction between general disturbance and lack of chemicals.

## Revendications

1. Dispositif pour le fontionnement et la surveillance d'un appareil de dosage (29, 33) dans le traitement de l'eau, avec commande électronique et controle des fonctions, caractérisé par la réunion de l'ensemble de la constitution électronique de circuits nécessaires au fonctionnement sous forme d'un seul composant éelectronique (1) fabriqué selon la technique CMOS avec auto-surveillance de toutes les fonctions imposées et de la fonction de mise hors d'action de secours lors de chaque perturbation, fonction à laquelle est adjoint un relais (15) exécutant, lors du processus de mise en circuit, un contrôle de position zéro, attirant son armature après vérification de cette fonction, mais se déclechant à nouveau en cas de perturbation d'un processus de verification, dispositif dans lequel, est adjoint, dans le composant électronique (1), un commutateur codifié (3) qui reçoit les impulsions fournies par un compteur de liquide (27) mesurant le volume du liquide auquel il faut amener l'agent chimique dosé et qui répond en vue de la mise en action de l'appareil de dosage, chaque fois que la valeur de ces impulsions coïncide avec la valeur à laquelle il a été précodifié, le composant électronique (1) étant agencé de telle sorte que la mise en action de l'appareil de dosage s'effectue également pendant un laps de temps qui assure le déroulement de la course de dosage même dans les conditions les plus défavorables et, a cet effet, ce dispositif incorpore un contrôle de position finale de l'entraînement de pompe (23), comportant un capteur (24) branché sur le composant électronique (1), et adjoint à l'appreil de dosage et à l'entraînement (18, 23) de celui-ci, ainsi qu'une surveillance de niveau d'agent chimique à doser, comportant un capteur (7) branché sur le composant électronique (1), incorporant de préférence un commutateur du type à effet Hall mesurant sans contact, et un dispositif de surveillance de pression differentielle (9) pourvu de palpeurs avant (10) et après (11) une valve d'injection (12) branchée entre l'appareil de dosage (29, 33) et la conduite à liquide (26) à traiter, afin de contrôler la fonction effective de l'entrainement de dosage (18, 23).

2. Dispositif selon la revendication 1, caractérisé par le fait qu'il comporte un affichage optique et/ou acoustique (36, 37, 38) faisant en particulier une distinction entre une perturbation générale et un manque d'agent chimique.

0 126 262